# EUROPEAN PATENT SPECIFICATION

(11) **EP 3 194 456 B1**
(45) Date of publication and mention of the grant of the patent: **26.09.2018**
(21) Application number: 15763680.4
(22) Date of filing: 20.08.2015
(51) Int. Cl.: C08F 30/02, C08L 71/12, C08K 5/5313

(54) **PHOSPHORUS-CONTAINING FLAME RETARDANTS**
PHOSPHORHALTIGE FLAMMHEMMER
IGNIFUGEANTS CONTENANT DU PHOSPHORE

(30) Priority: 15.09.2014 US 201414486224
(43) Date of publication of application: 26.07.2017
(73) Proprietor: LANXESS Solutions US Inc., Middlebury, CT 06762 (US)
(72) Inventor: TIMBERLAKE, Larry D., Kirkwood, MO 63122 (US); HANSON, Mark V., West Lafayette, IN 47906 (US); SUBRAMANIAM, Narayan, West Lafayette, IN 47906 (US); FIELDING, William R., West Lafayette, IN 47906 (US); BURGE, Matthew S., West Lafayette, IN 47906 (US)
(74) Representative: Dehns
(86) International application number: PCT/US2015/046134
(87) International publication number: WO 2016/043921

(56) References cited:
- CN-A- 103 709 717
- US-A1- 2006 074 154
- US-A1- 2010 292 376
- US-A1- 2015 005 417

## Description

This invention relates to phosphorus-containing flame retardants particularly, but not exclusively for glass-filled polyamide resins.

### BACKGROUND

With current and future market requirements for electrical components trending toward lighter weight plastic parts with improved electrical and mechanical properties, there is a substantial growth in the use of engineering plastics for electronic applications. At the present time, polyamides are the dominant engineering thermoplastic for electronic and other applications, especially when reinforced with a glass filler to increase their structural and impact strength and rigidity.

Polyamides are, in general, characterized as being relatively thermally stable upon long exposure to processing temperatures and shear. Upon exposure to flame, however, they burn quite readily, with the flammability being characterized by a dripping behavior of the burning resin. There is therefore a substantial and increasing demand for flame retardant polyamides and especially flame retardant glass-filled polyamides. Likewise, there is also demand for their polyester resin cousins, typically glass reinforced, with the choice of resin being dependent on several factors such as a balance between cost and mechanical property performance.

One of the major classes of flame retardants for thermoplastics and polyurethane foams is that of organic phosphorus compounds (typically phosphates and phosphonates). These may be non-halogenated or may include phosphorus-halogen compounds and blends of phosphorous compounds with halogenated flame retardants, typically brominated flame retardants.

In general organic phosphorus compounds provide fire retardant activity through a combination of condensed phase reactions, vapor phase reactions, polymer carbonization promotion, and/or char formation. These processes obviously depend on the polymer in which such additive(s) reside. Therefore, specific phosphorus containing structures need to be designed for various polymers types.

For example, U.S. Patent No. 3,681,281 discloses a shaped structure comprising a polyester, at least 1 percent by weight of the polyester of a tertiary phosphine oxide, and from 10 to 50 percent by weight of the tertiary phosphine oxide of a synergist selected from the group consisting of triphenylmelamine, benzil and dibenzyl. Among the tertiary phosphine oxides exemplified is xylylene bis-diphenylphosphine oxide.

In an article entitled "Phosphorus based additives for flame retardant polyester. 1. Low molecular weight additives", Industrial & Engineering Chemistry Product Research and Development, (1982), 21(2), pages 328-31, Robert W Stackman evaluates various phosphorus-containing organic compounds, including xylylene bis-diphenylphosphine oxide, as flame retardants for poly(ethylene terephthalate) and poly(1,4-butylene terephthalate). The evaluation includes the effect of the additives on melt stability of preformed polymers as well as the effect upon flammability of films, as determined by a non-standard bottom burn, oxygen index method. The oxygen index values for these blends were a function of the phosphorus content of the blend. The efficiency of the phosphorus compounds as flame retardants changed as the nature of the phosphorus structure changed, with the order R₃PO > R(R'O)₂PO > (R'O)₃PO. Polymeric additives were reported to be attractive additives, giving a combination of a high degree of flame retardancy combined with a minor degree of property degradation on blending, even at <20 wt% of the blend.

Other organic phosphorus compounds have also been suggested for use as flame retardants for polyamides. For example, Research Disclosure 168051 (published April 1978) entitled "Improved Nylon" describes a flame-resistant nylon fiber prepared by coating flakes of bis(4-aminocyclohexyl)methane-dodecanedioic acid copolymer with 8-10% p-xylylenebis (diphenylphosphine oxide) flame retardant and spinning a yarn using a screw melter equipped with a homogenizing, in-line mixer to supply the molten polymer to a unit for producing a 34-filament yarn. The molten polymer was heated to 300-310° and the holdup time was approximately 15 min. The yarn was drawn 2.3 times on a hot pipe to produce a 100-denier yarn.

In addition, U.S. Patent No. 4,341,696 discloses a glass filled thermoplastic polyamide polymer rendered flame retardant by having combined therewith an effective amount of a tris-(3-hydroxyalkyl) phosphine oxide having the formula: 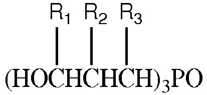 wherein R₁ and R₃ are any radical selected from the group consisting of hydrogen, phenyl and alkyl radicals of 1 to 4 carbon atoms and R₂ is any radical selected from the group consisting of hydrogen, phenyl and alkyl radicals of 2 to 4 carbon atoms, provided that when R₁ and R₃ are hydrogen radicals, R₂ is either an alkyl radical of 2 to 4 carbon atoms or a phenyl radical.

U.S. Patent No. 7,332,534 discloses a flame retardant formulation for thermoplastic and thermoset polymers, including polyesters and polyamides, containing, as flame retardant component A, from 90 to 99.9% by weight of phosphinate salt of the formula: 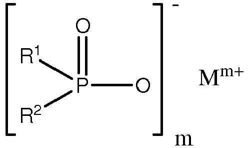 and/or a diphosphinate salt of the formula 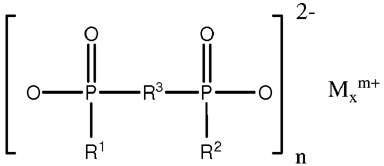 and/or polymers thereof, where R¹, R² are the same or different and are each C₁-C₆ alkyl, linear or branched, and/or aryl; R³ is C₁-C₁₀ alkylene, linear or branched, C₆-C₁₀ arylene, alkylarylene or arylalkylene; M is Mg, Ca, Al, Sb, Sn, Ge, Ti, Zn, Fe, Zr, Ce, Bi, Sr, Mn, Li, Na and/or K; m is from 1 to 4; n is from 1 to 4; x is from 1 to 4 and, as component B, from 0 to 50% by weight of a nitrogen-containing synergist or of a phosphorus/nitrogen flame retardant and, as component C, from 0.1 to 10% by weight of a liquid component.

U.S. Patent No. 8,420,719 discloses a flame-retardant resin composition comprising a base resin, such as a polyester, polyamide or styrenic resin and a polymeric benzylic phosphine oxide polymer or oligomer as flame retardant.

U.S. Patent No. 7,411,013 discloses a flame-retardant resin composition comprising a base resin (A), such as a polyester, polyamide or styrenic resin, an organic phosphorus compound (B) and a flame-retardant auxiliary (C), wherein the organic phosphorus compound (B) has a unit represented by the following formula: 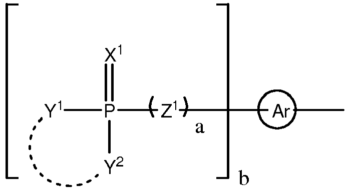 wherein Ar represents an aromatic hydrocarbon ring or a nitrogen-containing aromatic heterocycle; X¹ represents an oxygen atom or a sulfur atom; Y¹ and Y2 are the same or different and each represents a hydrocarbon group, an alkoxy group, an aryloxy group, or an aralkyloxy group; Z¹ represents an alkylene group, or a nitrogen-containing bivalent group corresponding to an alkylamine; Y¹ and Y² may bind to each other, and Y¹ and Y² together with the adjacent phosphorus atom may form a ring; "a" denotes 0 or 1; and "b" denotes an integer of 1 to 6.

According to the present invention, it has now been found that certain benzyl-substituted cyclic phosphinates, especially when combined with specific synergists, are highly effective flame retardants for thermoplastic resins, including polyamides, especially glass filled polyamides.

### SUMMARY

Accordingly, the invention resides in one aspect in a flame-retardant resin composition comprising a base resin (A), an organophosphorus compound (B) comprising a unit represented by at least one of the following formulas (I), (II) and (III): 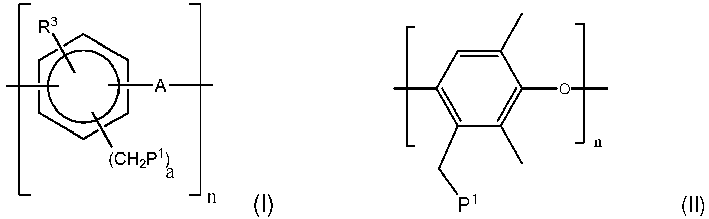 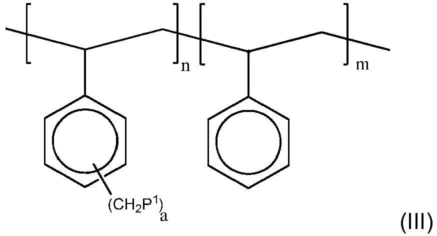
where A is selected from O, S, SO₂, a single bond, and alkyl;
P¹ is a phosphorus-containing group of the formula: 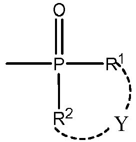
wherein R¹, R² and Y, together with the phosphorus atom to which R¹ and R² are bound, form a ring, wherein R¹ and R² are the same or different and each is selected from O-alkyl, O-aryl, alkyl and aryl, and Y is a linking group selected from direct bond, alkylene and -O-, e.g., Y is a direct bond;
R³ is H or alkyl;
each a is an integer individually selected from 0 to 4, e.g., 0 1, 2, 3, or 4 provided that at least one a is at least 1;
n is an integer from 4 to 100,000, e.g., 5 to 100,000, and m is an integer from 0 to 100,000, e.g., 1, 2, 3, 4 or 5 to 100,000; and, optionally,
(C) at least one flame retardant adjuvant material.

It should be understood that in formula (I), (la) and (II), where n is 2, 3, 4, 5 or higher, each of the individual variables A, R¹, R², R³, Y, M or a for each unit of Formula (I), (la) or (II) may be the same or different. For example, a polymer comprising monomer units of Formula (I) can contain monomer units of Formula (I) where the variable 'a' is 1, and monomer units of Formula (I) where the variable 'a' is 0, resulting in a polymer comprising phenyl rings linked by a group A, wherein some of the phenyl rings are substituted by a group (CH₂P¹) and some of the phenyl rings are not substituted by a group (CH₂P¹).

Conveniently, the organophosphorus compound (B) is present in an amount of 10% to 40%, e.g., 10% to 30 %, by weight of the flame-retardant resin composition.

Conveniently, at least one flame retardant adjuvant material (C) is present and is selected from melamine, a melamine derivative such as a melamine condensation product or melamine salt, an inorganic metal compound, a clay material, a layered double hydroxide material, and a polyphenylene ether resin.

Conveniently, the at least one flame retardant adjuvant material (C) comprises a melamine salt and an inorganic metal compound in a weight ratio of from 10:1 to 1:1 or a condensation product of melamine and an inorganic metal compound in a weight ratio of from 10:1 to 1:1.

Conveniently, the inorganic metal compound comprises a metal salt such as a borate, particularly zinc borate.

Conveniently, the melamine salt comprises a melamine phosphate, particularly melamine polyphosphate or melamine pyrophosphate; the condensation product of melamine conveniently comprises melam, melem or melon.

Conveniently, the at least one flame retardant adjuvant material (C) is present in an amount of 1 to 20 wt% of the flame-retardant resin composition. For example, the combination of the organophosphorus compound (B) and the at least one flame retardant adjuvant material (C) may make up from 11 to 60 wt% of the total composition, e.g., from 11 to 50 wt% or from 15 to 40% of the total composition.

Conveniently, the base resin (A) comprises at least one of a thermoplastic or thermoset resin. A typical thermoset resin is an epoxy resin and a typical thermoplastic resin is polyester, a polyamide, a polycarbonate or a styrenic resin.

In one embodiment, the base resin (A) comprises a polyamide and particularly a glass-filled polyamide, typically containing from 15 to 40 % glass by weight of the total weight of the polyamide and glass.

### DESCRIPTION OF THE EMBODIMENTS

Described herein is a benzylic-substituted organophosphorus flame-retardant compound, and a flame-retardant resin composition comprising a base resin (A), a benzylic-substituted organophosphorus compound (B) and optionally at least one flame retardant adjuvant material (C).

### Base Resin

The base resin can be any organic macromolecular material, such as a polyester-series resin, a styrenic resin, a polyamide-series resin, a polycarbonate-series resin, a vinyl-series resin, an olefinic resin, an acrylic resin, an epoxy resin, a blend of two or more of said resins or a blend of one or more of said resins with a polyphenylene oxide-series resin. The base resin can be a thermoplastic or a thermoset resin and in some embodiments further comprise a reinforcing agent, e.g., a glass reinforced resin. Particularly preferred are engineering resins, such as polyester-series resins, polyamide-series resins and polycarbonates, especially glass-filled polyesters and polyamides.

Polyester-series resins include homopolyesters and copolyesters obtained by, for example, polycondensation of a dicarboxylic acid component and a diol component, and polycondensation of a hydroxycarboxylic acid or a lactone component. Preferred polyester-series resins usually include a saturated polyester-series resin, in particular an aromatic saturated polyester-series resin, such as polybutylene terephthalate.

Polyamide-series resins include polyamides derived from a diamine and a dicarboxylic acid; polyamides obtained from an aminocarboxylic acid, if necessary in combination with a diamine and/or a dicarboxylic acid; and polyamides derived from a lactam, if necessary in combination with a diamine and/or a dicarboxylic acid. The polyamide also includes a copolyamide derived from at least two different kinds of polyamide constituent components.

Suitable polyamide-series resins include aliphatic polyamides (such as nylon 46, nylon 6, nylon 66, nylon 610, nylon 612, nylon 11 and nylon 12), polyamides obtained from an aromatic dicarboxylic acid (e.g., terephthalic acid and/or isophthalic acid) and an aliphatic diamine (e.g., hexamethylenediamine, nonamethylenediamine), and polyamides obtained from both aromatic and aliphatic dicarboxylic acids (e.g., both terephthalic acid and adipic acid) and an aliphatic diamine (e.g., hexamethylenediamine), and others. These polyamides may be used singly or in combination.

The base resin may be composited with a filler to modify its properties, such as mechanical strength, rigidity, thermal stability and electrical conductivity. The filler may be fibrous or non-fibrous. Suitable fibrous fillers include glass fibers, asbestos fibers, carbon fibers, silica fibers, fibrous wollastonite, silica-alumina fibers, zirconia fibers, potassium titanate fibers, metal fibers, and organic fibers having high melting point (e.g., an aliphatic or aromatic polyamide, an aromatic polyester, a fluorine-containing resin, an acrylic resin such as a polyacrylonitrile). Suitable non-fibrous fillers include plate-like (or layered) fillers, such as kaolin, talc, glass flakes, mica, graphite, metal foil, and layered phosphates (e.g., zirconium phosphate, and titanium phosphate). In addition, particulate or amorphous fillers can be used including carbon black, white carbon, silicon carbide, silica, powdered quartz, glass beads, glass powder, milled fibers (such as milled glass fiber), silicates (e.g., calcium silicate, aluminum silicate, clays, diatomites), metal oxides (e.g., iron oxide, titanium oxide, zinc oxide, and alumina), metal carbonates (e.g., calcium carbonate and magnesium carbonate), metal sulfates (e.g., calcium sulfate and barium sulfate), and metal powders.

Preferred fillers include glass fiber and carbon fiber. In one embodiment the base resin comprises a glass-filled polyamide containing from 15 to 40 % glass fiber by weight of the total weight of the polyamide and glass.

### Organophosphorus Compound

The organophosphorus compound employed in the present flame-retardant resin composition can be represented by at least one of the following formulas (I), (la), (II) and (III): 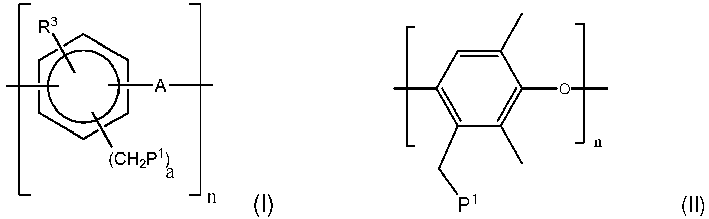 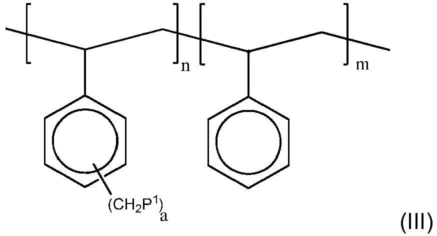 where A is selected from O, S, SO₂, a single bond, and alkyl;
P¹ is a phosphorus-containing group of the formula: 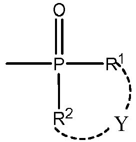
wherein R¹, R² and Y, together with the phosphorus atom to which R¹ and R² are bound, form a ring, wherein R¹ and R² are the same or different and each is selected from O-alkyl, O-aryl, alkyl and aryl, and Y is a linking group selected from direct bond, alkylene and -O-, e.g., Y is a direct bond;
R³ is H or alkyl;
each a is an integer individually selected from 0 to 4, e.g., 0 1, 2, 3, or 4 provided that at least one a is at least 1;
n is an integer from 4 to 100,000, e.g., 5 to 100,000 and m is an integer from 0 to 100,000, e.g., 1, 2, 3, 4 or 5 to 100,000, e.g., n is an integer from 4 to 100,000, or 5 to 100,000, and m is an integer from 1 to 100,000.

Representative benzylic-substituted organophosphorus compounds within the above formulas include the cyclic phosphinates shown below: 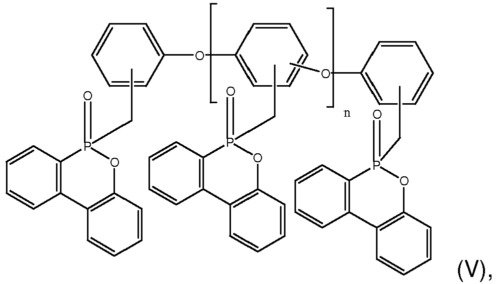 e.g., 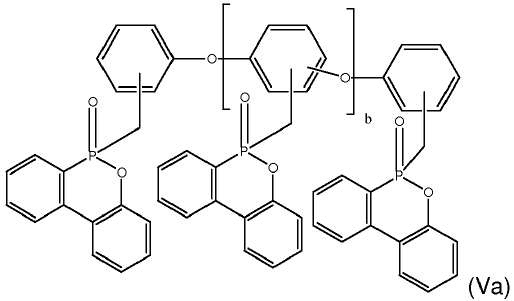 wherein b is 2 or 3,

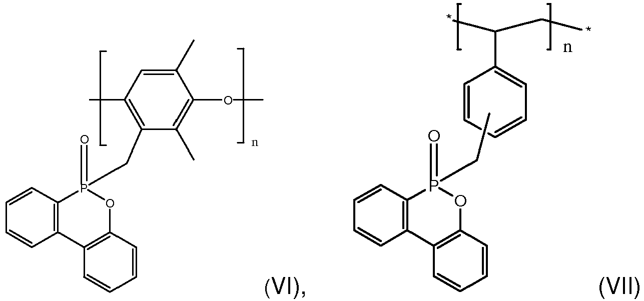

Conveniently, the organophosphorus compound (B) is present in an amount of from 10% to 40%, e.g., 10% to 30 %, by weight of the flame-retardant resin composition.

### Flame Retardant Adjuvant

To enhance its flame retardant properties, the present resin composition can include at least one flame retardant adjuvant material in addition to the organophosphorus compound described above. Suitable flame retardant adjuvant materials comprise melamine and melamine derivatives such as melamine salts and condensation products of melamine, inorganic metal compounds, clay compounds, layered double hydroxide materials, polyphenylene ether resins and mixtures thereof.

Suitable melamine salts include salts of melamine itself as well as salts of melamine derivatives, such as substituted melamines (e.g., an alkylmelamine such as 2-methylmelamine, guanylmelamine), condensation products of melamine (e.g., melam, melem, melon), and copolycondensed resins of melamine (e.g., melamine-formaldehyde resins, phenol-melamine resins, benzoguanamine-melamine resins and aromatic polyamine-melamine resins). Generally the salts are produced by reaction of the melamine with an oxygen-containing acid, such as nitric acid, a chloric acid (such as perchloric acid, chloric acid, chlorous acid, hypochlorous acid), a phosphorous acid, a sulfuric acid, a sulfonic acid, a boric acid, a chromic acid, an antimonic acid, a molybdic acid, a tungstic acid, stannic acid, or silicic acid.

Examples of suitable melamine salts include melamine orthophosphate, melamine phosphate, melamine pyrophosphates (including melamine pyrophosphate and dimelamine pyrophosphate), melamine polyphosphates (including melamine triphosphate and melamine tetraphosphate), melamine sulfates (including melamine sulfate, dimelamine sulfate and guanylmelamine sulfate), melamine pyrosulfates (e.g., melamine pyrosulfate and dimelamine pyrosulfate), melamine sulfonates (e.g., melamine methanesulfonate, melam methanesulfonate, and melem methanesulfonate) and melamine orthoborates (e.g., mono- to trimelamine orthoborates).

The preferred melamine salts are melamine pyrophosphates. Preferred condensation products of melamine comprise melam, melem or melon.

Suitable inorganic metal compounds for use in the present synergist combination include metal salts of inorganic acids, metal oxides and hydroxides, and metal sulfides.

Where the inorganic metal compound is a metal salt of an inorganic acid, suitable inorganic acids include phosphorous acids (such as orthophosphoric acid, metaphosphoric acid, phosphorous acid, hypophosphorous acid, hypophosphoric, pyrophosphoric acid, polyphosphoric acids, anhydrous phosphoric acid and polymetaphosphoric acid), boric acids (such as orthoboric acid, metaboric acid; pyroboric acid, tetraboric acid, pentaboric acid and octaboric acid), a stannic acid (such as stannic acid, metastannic acid, orthostannic acid and hexahydroxostannic acid), a molybdic acid, and a tungstic acid.

Examples of suitable metal salts include calcium pyrophosphate, calcium polymetaphosphate, alkaline earth metal hydrogenphosphates (such as magnesium hydrogen orthophosphate and calcium hydrogen orthophosphate); transition metal hydrogenphosphate (such as manganese hydrogenphosphate, iron hydrogenphosphate, zinc hydrogenphosphate and cadmium hydrogenphosphate); a hydrogenphosphate of a metal of Group 13 of the Periodic Table of Elements (such as aluminum hydrogenphosphate); a hydrogenphosphate of a metal of Group 14 of the Periodic Table of Elements (such as tin hydrogenphosphate), an alkaline earth metal borate (such as calcium orthoborate, calcium metaborate, calcium pyroborate and trimagnesium tetraborate); a transition metal borate (such as manganese orthoborate, manganese tetraborate, nickel diborate, copper metaborate, zinc metaborate, zinc tetraborate, cadmium metaborate and cadmium tetraborate), an alkali metal stannate (e.g., sodium stannate and potassium stannate), an alkaline earth metal stannate (e.g., magnesium stannate), a transition metal stannate (e.g., cobalt stannate and zinc stannate), zinc molybdate and zinc tungstate.

Examples of suitable metal oxides and hydroxides include molybdenum oxide, tungstic oxide, titanium oxide, zirconium oxide, tin oxide, copper oxide, zinc oxide, aluminum oxide, nickel oxide, iron oxide, manganese oxide, antimony trioxide, antimony tetraoxide, antimony pentoxide, aluminum hydroxide, magnesium hydroxide, tin hydroxide, and zirconium hydroxide. Mixed oxides such as aluminosilicates, including clays, can also be used.

Examples of suitable metal sulfides include molybdenum sulfide, tungstic sulfide and zinc sulfide. The preferred inorganic metal compounds are borates and particularly zinc borates.

In one embodiment, the flame retardant adjuvant is a combination of a melamine salt and an inorganic metal compound in a weight ratio of from 10:1 to 1:1. In another embodiment, the flame retardant adjuvant comprises a combination of a melamine condensation product and an inorganic metal compound in a weight ratio of from 10:1 to 1:1.

In another embodiment, the flame retardant adjuvant material is a char-forming organic compound such as a polyphenylene ether (PPE) type resin. A specific PPE resin example would be PPO 803 from Sabic Innovative Plastics. The PPE resin can be used typically at a load level of up to 50%, e.g., from 1% to 25%, more typically from 5% to 15%.

### EXAMPLES

### Preparation of DOPO-Methylene-poly(phenylene ether):

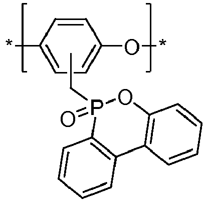

Lithium bis(trimethylsilyl)amide-[LiHMDS] (52 g, 0.31 mol) and THF (220 mL) were added to a 1 L round-bottom flask fitted with an over-head stirrer, temperature probe, addition funnel and reflux condenser. The solution was placed under N₂, cooled to 5 °C (ice bath) and 9,10-dihydro-9-oxa-10-phosphaphenanthrene 10-oxide, i.e., DOPO, (70 g, 0.32 mol) was added portion-wise over 10 minutes while maintaining an internal temperature below 10 °C. Upon complete addition, bromo-methylated poly(phenylene ether (44 g, 0.27 mol) (as described in Example 3, but with slightly higher molecular weight) in THF (120 mL) was added via addition funnel over 1 hr. During the addition, the internal temperature rose to 25 °C and a yellow/white slurry was obtained. Upon complete addition, the reaction slurry was allowed to stir at room temperature for 16 hours and then concentrated to a solid under reduced pressure. The resulting yellow solid was taken up in methylene chloride (300 mL), washed with H₂O, dried, filtered and concentrated to provide an off white solid. This solid was placed in a vacuum oven (210 °C, 29 in. Hg) for 3 hours, to provide the title compound (87 g) as a glass after cooling to room temperature.

### Flame Retardants in Glass-Reinforced PA66:

The flame retardant compound described in the Example above was formulated with PA66 resin by mixing the materials either with a twin screw extruder using a PA66 glass concentrate to produce a target 30% glass fiber reinforcement, or in a vented Brabender Preparation Center. In the Brabender Preparation Center the samples were compounded for four minutes at 265 °C. About 3 minutes after the start of mixing, glass fiber was added over a period of about 15 seconds to produce a target 30% glass fiber reinforcement. The compounded materials were ground on a Thomas Wiley mill and then molded by using a small injection molding machine at 265 °C to form 1/16" thick UL-94 test bars.

The test bars were subjected to the UL-94 vertical burn test protocol in which a bar is subjected to two 10 second flame applications. The time for the bar to extinguish after each application is noted and reported as Time 1 (T1) and Time 2 (T2) for the bar. The average burn times for 5 test bars were noted for both flame applications (T1, T2). The total burn times were also summed for each of the two flame applications across all five test bars along with the observations of any dripping behavior. The results are shown in Table 1.

**Table 1. Testing of Compound XI with Melem in 30% GR PA66.**

| **Formulations** | 1 | 2 | 3 |
|---|---|---|---|
| Polyamide 6,6, % | 55.2 | 45.2 | 42.2 |
| Glass, % | 30 | 30 | 30 |
| Inventive Flame Retardant, % | 12.4 | 12.4 | 15.4 |
| DELACAL NFR HP, % | 0 | 10 | 10 |
| Drip & Stabilizer Package¹ | 2.4 | 2.4 | 2.4 |

| **UL-94 VBT** (1/16") | | | |
|---|---|---|---|
| Ave T1/T2, s | 28/--- | 15/0 | 2/0 |
| Drips | BB/C² | None | None |
| Tot. Burn Time (5 B), sec. | 143 | 77 | 11 |
| Rating | V-2 | V-1 | V-0 |

| | | | |
|---|---|---|---|
| ¹0.4% PTFE (DYNEON TF 9205); 2% Surlyn ²Burning bar/chunk which separated at the clamp & continued to burn on the chamber floor DELACAL NFR HP is a multi-component material comprised of the two main homologues melem and melam, available from Delamin, Ltd. | | | |

This data shows that at certain load levels of FR or adjuvant synergist in combination, a strong flame retardant system can be achieved.

## Claims

1. A flame-retardant comprising one or more polymers comprising a unit represented by formula (I), (II) or (III): 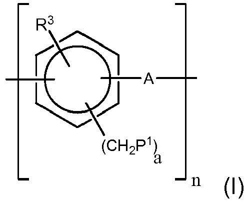 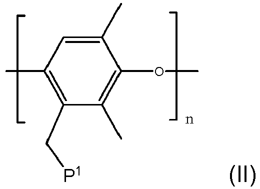 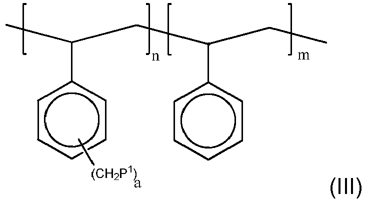
where A is selected from O, S, SO₂, a single bond, and alkyl,
P¹ is a phosphorus-containing group of the formula: 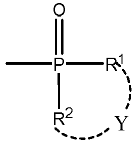
wherein R¹, R² and Y, together with the phosphorus atom to which R¹ and R² are bound, form a ring, wherein R¹ and R² are the same or different and each is selected from O-alkyl, O-aryl, alkyl and aryl, and Y is a linking group selected from direct bond, alkylene and -O-, e.g., Y is a direct bond;
R³ is H or alkyl;
each a is an integer individually selected from 0 to 4, provided that at least one a is at least 1; n is an integer from 4 to 100,000, and m is an integer from 0 to 100,000.

2. The flame-retardant according to claim 1 wherein m is an integer from 1 to 100,000.

3. The flame-retardant according to claim 1 which comprises one or more compounds comprising a unit represented by formula (I) or (II).

4. The flame-retardant according to claim 1 comprising one or more polymers having a formula (V), (Va), (VI) or (VII): 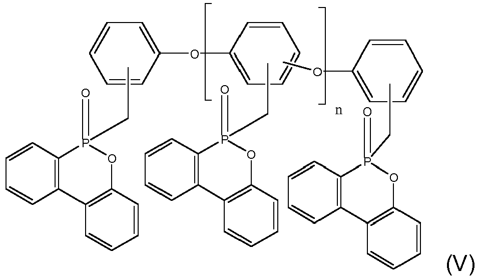 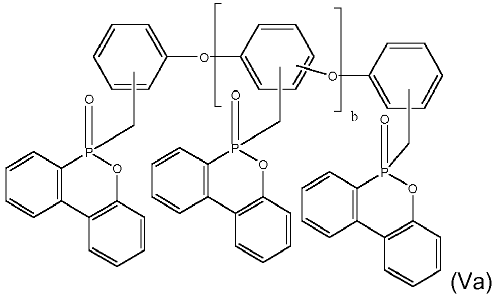 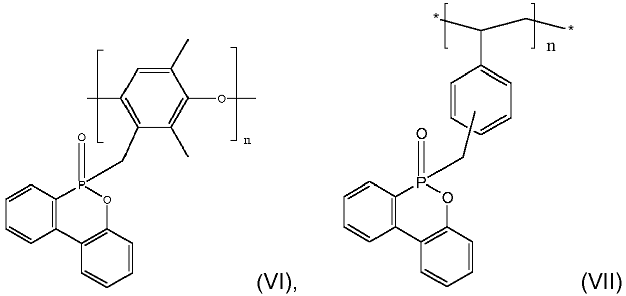 wherein b is 2 or 3.

5. The flame-retardant according to claim 4 comprising at least one polymer of formula (V) or (Va).

6. A flame retardant composition comprising a flame retardant according to any one of claims 1, 2, 3, 4 or 5, and a base resin selected from the group consisting of polyester resins, styrenic resins, polyamide resins, polycarbonate resins, vinyl resins, olefinic resins, acrylic resins, epoxy resins, blends of two or more of said resins, and blends of one or more of said resins with a polyphenylene oxide-series resin, wherein the flame retardant is present in an amount of from 10% to 40 % by weight of the total flame-retardant composition.

7. The flame retardant composition according to claim 6 wherein the base resin comprises a polyester resin, styrenic resin, polyamide resin, polycarbonate resin or epoxy resin.

8. The flame retardant composition according to claim 7 wherein the base resin comprises a polyamide resin.

9. The flame retardant composition according to claim 7 wherein the base resin further comprises a glass reinforcing agent.

10. The flame retardant composition according to claim 9 wherein the base resin comprises a glass-filled polyamide resin, comprising from 15 to 40% glass by weight of the total weight of the polyamide and glass.

11. The flame retardant composition according to claim 6 further comprising at least one flame retardant adjuvant material selected from melamine condensation products, melamine salts, inorganic metal compounds, clay compounds, layered double hydroxide materials, and polyphenylene ether resins and mixtures thereof, wherein said at least one flame retardant adjuvant material is present in an amount of 1 to 20 wt% of the flame-retardant resin composition.

12. The flame retardant composition according to claim 11, wherein the inorganic metal compound is selected from metal salts of inorganic acids, metal oxides and hydroxides, metal sulfides and mixtures thereof.

13. The flame retardant composition of claim 12, wherein the inorganic metal compound comprises a borate.

14. The flame retardant composition according to claim 11, wherein the melamine salt comprises a melamine phosphate, polyphosphate, and/or melamine pyrophosphate and wherein the melamine condensation product comprises one or more of melam, melem or melon.

15. The flame retardant composition according to claim 11 comprising at least one melamine salt and/or melamine condensation product and at least one adjuvant selected from the group consisting of metal oxides, metal hydroxides, clay compounds and layered double hydroxide materials.

## Patentansprüche

1. Flammschutzmittel, umfassend ein oder mehrere Polymere, die eine Einheit umfassen, die durch Formel (I), (II) oder (III) wiedergegeben wird: 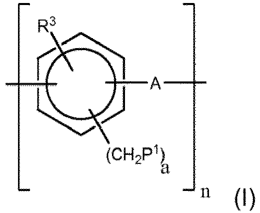 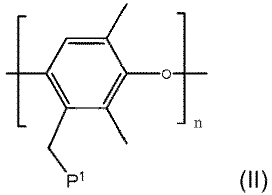 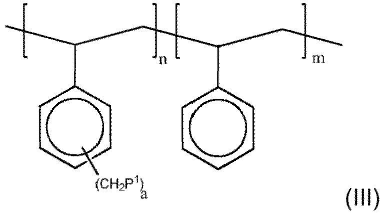
wobei A aus O, S, SO₂, einer Einfachbindung und Alkyl ausgewählt ist,
P¹ für eine phosphorhaltige Gruppe der Formel: 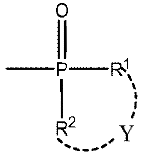
steht, wobei R¹, R² und Y zusammen mit dem Phosphoratom, an das R¹ und R² gebunden sind, einen Ring bilden, wobei R¹ und R² gleich oder verschieden sind und jeweils aus O-Alkyl, O-Aryl, Alkyl und Aryl ausgewählt sind und Y für eine Verknüpfungsgruppe steht, die aus einer direkten Bindung, Alkylen und -O- ausgewählt ist, z. B. Y für eine direkte Bindung steht;
R³ für H oder Alkyl steht;
a jeweils für eine ganze Zahl steht, die individuell aus 0 bis 4 ausgewählt ist, mit der Maßgabe, dass mindestens ein a für mindestens 1 steht; n für eine ganze Zahl von 4 bis 100.000 steht und m für eine ganze Zahl von 0 bis 100.000 steht.

2. Flammschutzmittel nach Anspruch 1, wobei m für eine ganze Zahl von 1 bis 100.000 steht.

3. Flammschutzmittel nach Anspruch 1, dass ein oder mehrere Verbindungen umfasst, die eine Einheit der Formel (I) oder (II) umfassen.

4. Flammschutzmittel nach Anspruch 1, umfassend ein oder mehrere Polymere mit der Formel (V), (Va), (VI) oder (VII): 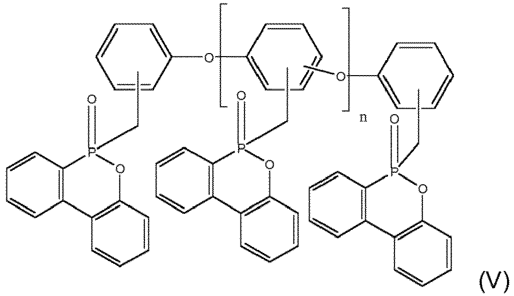 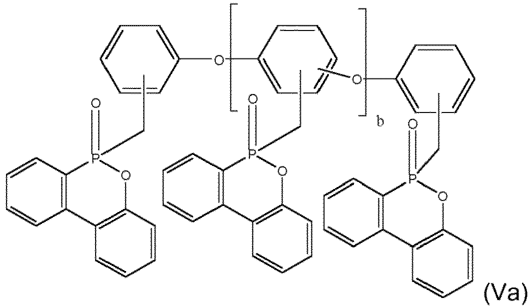 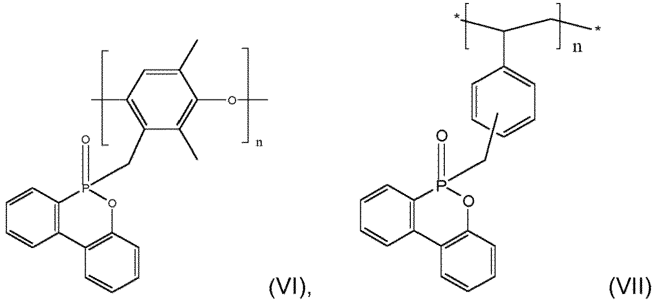 wobei b für 2 oder 3 steht.

5. Flammschutzmittel nach Anspruch 4, umfassend mindestens ein Polymer der Formel (V) oder (Va).

6. Flammfeste Zusammensetzung, umfassend ein Flammschutzmittel nach einem der Ansprüche 1, 2, 3, 4 oder 5 und ein Grundharz aus der Gruppe bestehend aus Polyesterharzen, Styrolharzen, Polyamidharzen, Polycarbonatharzen, Vinylharzen, Olefinharzen, Acrylharzen, Epoxidharzen, Mischungen von zwei oder mehr der Harze und Mischungen von einem oder mehreren der Harze mit einem Harz der Polyphenylenoxid-Reihe, wobei das Flammschutzmittel in einer Menge von 10 bis 40 Gew.-% der gesamten flammfesten Zusammensetzung vorliegt.

7. Flammfeste Zusammensetzung nach Anspruch 6, wobei das Grundharz ein Polyesterharz, Styrolharz, Polyamidharz, Polycarbonatharz oder Epoxidharz umfasst.

8. Flammfeste Zusammensetzung nach Anspruch 7, wobei das Grundharz ein Polyamidharz umfasst.

9. Flammfeste Zusammensetzung nach Anspruch 7, wobei das Grundharz ferner ein Glasverstärkungsmittel umfasst.

10. Flammfeste Zusammensetzung nach Anspruch 9, wobei das Grundharz ein glasgefülltes Polyamidharz umfasst, das 15 bis 40 Gew.-% Glas, bezogen auf das Gesamtgewicht des Polyamids und Glases, umfasst.

11. Flammfeste Zusammensetzung nach Anspruch 6, ferner umfassend mindestens einen Flammschutzmittel-Hilfsstoff, der aus Melamin-Kondensationsprodukten, Melaminsalzen, anorganischen Metallverbindungen, Tonverbindungen, schichtförmigen Doppelhydroxid-Materialien und Polyphenylenetherharzen und Mischungen davon ausgewählt ist, wobei der mindestens eine Flammschutzmittel-Hilfsstoff in einer Menge von 1 bis 20 Gew.-% der flammfesten Harzzusammensetzung vorliegt.

12. Flammfeste Zusammensetzung nach Anspruch 11, wobei die anorganische Metallverbindung aus Metallsalzen anorganischer Säuren, Metalloxiden und -hydroxiden, Metallsulfiden und Mischungen davon ausgewählt ist.

13. Flammfeste Zusammensetzung nach Anspruch 12, wobei die anorganische Metallverbindung ein Borat umfasst.

14. Flammfeste Zusammensetzung nach Anspruch 11, wobei das Melaminsalz ein Melaminphosphat, Melaminpolyphosphat und/oder Melaminpyrophosphat umfasst und wobei das Melamin-Kondensationsprodukt Melam, Melem und/oder Melon umfasst.

15. Flammfeste Zusammensetzung nach Anspruch 11, umfassend mindestens ein Melaminsalz und/oder Melamin-Kondensationsprodukt und mindestens einen Hilfsstoff aus der Gruppe bestehend aus Metalloxiden, Metallhydroxiden, Tonverbindungen und schichtförmigen Doppelhydroxid-Materialien.

## Revendications

1. Agent ignifugeant comprenant un ou plusieurs polymères comprenant un motif représenté par la formule (I), (II) ou (III) : 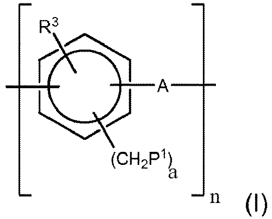 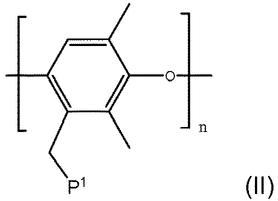 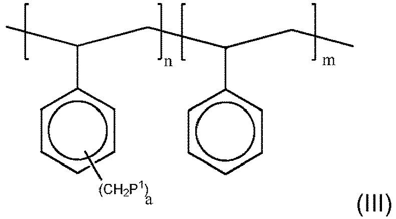 où
A est choisi entre O, S, SO₂, une simple liaison et un groupe alkyle,
P¹ est un groupe contenant du phosphore de formule : 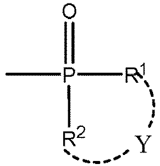
dans lequel R¹, R² et Y, conjointement avec l'atome de phosphore auquel R¹ et R² sont liés, forment un cycle, dans lequel R¹ et R² sont identiques ou différents et sont chacun choisis parmi les groupes O-alkyle, O-aryle, alkyle et aryle et Y est un groupe de liaison choisi entre une liaison directe, un groupe alkylène et -O-, par exemple Y est une liaison directe ;
R³ est H ou un groupe alkyle ;
chaque a est un nombre entier individuellement choisi de 0 à 4, à condition qu'au moins un a vaille au moins 1 ;
n est un nombre entier de 4 à 100 000 et
m est un nombre entier de 0 à 100 000.

2. Agent ignifugeant selon la revendication 1 dans lequel m est un nombre entier de 1 à 100 000.

3. Agent ignifugeant selon la revendication 1 qui comprend un ou plusieurs composés comprenant un motif représenté par la formule (I) ou (II).

4. Agent ignifugeant selon la revendication 1 comprenant un ou plusieurs polymères répondant à une formule (V), (Va), (VI) ou (VII) : 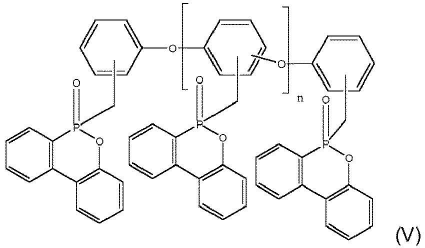 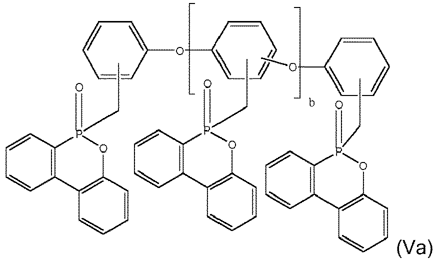 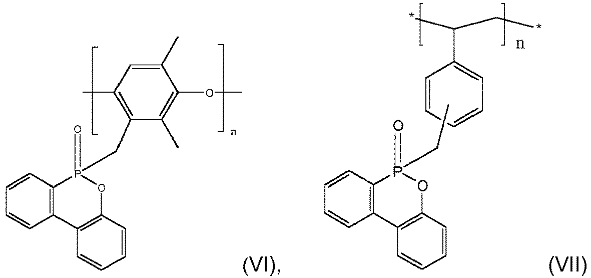 dans lesquels b vaut 2 ou 3.

5. Agent ignifugeant selon la revendication 4 comprenant au moins un polymère de formule (V) ou (Va).

6. Composition ignifuge comprenant un agent ignifugeant selon l'une quelconque des revendications 1, 2, 3, 4 ou 5 et une résine de base choisie dans le groupe constitué par les résines de polyester, les résines styréniques, les résines de polyamide, les résines de polycarbonate, les résines vinyliques, les résines oléfiniques, les résines acryliques, les résines époxy, les mélanges de deux ou plus de deux desdites résines et les mélanges d'une ou plusieurs desdites résines avec une résine de la série du poly(oxyde de phénylène), dans laquelle l'agent ignifugeant est présent en une quantité de 10 % à 40 % en poids de la composition ignifuge totale.

7. Composition ignifuge selon la revendication 6 dans laquelle la résine de base comprend une résine de polyester, une résine styrénique, une résine de polyamide, une résine de polycarbonate ou une résine époxy.

8. Composition ignifuge selon la revendication 7 dans laquelle la résine de base comprend une résine de polyamide.

9. Composition ignifuge selon la revendication 7 dans laquelle la résine de base comprend en outre un agent renforçant en verre.

10. Composition ignifuge selon la revendication 9 dans laquelle la résine de base comprend une résine de polyamide chargée de verre, comprenant de 15 à 40 % en poids de verre par rapport au poids total du polyamide et du verre.

11. Composition ignifuge selon la revendication 6 comprenant en outre au moins une substance adjuvant d'ignifugeant choisie parmi les produits de condensation de mélamine, les sels de mélamine, les composés métalliques inorganiques, les composés d'argile, les substances hydroxydes doubles lamellaires et les résines de poly(oxyde de phénylène) et les mélanges de ceux-ci, dans laquelle ladite au moins une substance adjuvant d'agent ignifugeant est présente en une quantité de 1 à 20 % en poids de la composition de résine ignifuge.

12. Composition ignifuge selon la revendication 11, dans laquelle le composé métallique inorganique est choisi parmi les sels métalliques d'acides inorganiques, les oxydes et hydroxydes métalliques, les sulfures métalliques et les mélanges de ceux-ci.

13. Composition ignifuge selon la revendication 12, dans laquelle le composé métallique inorganique comprend un borate.

14. Composition ignifuge selon la revendication 11, dans laquelle le sel de mélamine comprend un phosphate, polyphosphate et/ou pyrophosphate de mélamine et dans laquelle le produit de condensation de mélamine en comprend un ou plusieurs parmi le melam, le melem ou le melon.

15. Composition ignifuge selon la revendication 11 comprenant au moins un sel de mélamine et/ou produit de condensation de mélamine et au moins un adjuvant choisi dans le groupe constitué par les oxydes métalliques, les hydroxydes métalliques, les composé d'argile et les substances hydroxydes doubles lamellaires.
